# EUROPEAN PATENT APPLICATION

(11) **EP 4 745 439 A1**
(43) Date of publication of application: **20.05.2026**
(21) Application number: 23947142.8
(22) Date of filing: 03.08.2023
(51) Int. Cl.: F16K 11/087

(54) **THREE-WAY BALL VALVE, ELECTRIC VEHICLE, OPENING DEGREE CONTROL METHOD, ELECTRONIC DEVICE AND STORAGE MEDIUM**

(71) Applicant: Zhejiang Zeekr Intelligent Technology Co., Ltd., Ningbo, Zhejiang 315899 (CN); Zhejiang Geely Holding Group Co., Ltd., Hangzhou, Zhejiang 310051 (CN)
(72) Inventor: HU, Lei, Ningbo, Zhejiang 315899 (CN); ZHENG, Xingliang, Ningbo, Zhejiang 315899 (CN); XIA, Songyong, Ningbo, Zhejiang 315899 (CN); XU, Junbo, Ningbo, Zhejiang 315899 (CN); WANG, Jian, Ningbo, Zhejiang 315899 (CN); XING, Xiaodong, Ningbo, Zhejiang 315899 (CN)
(74) Representative: Michalski Hüttermann & Partner Patentanwälte mbB
(86) International application number: PCT/CN2023/110922
(87) International publication number: WO 2025/025196

(57) **Abstract**

Disclosed is a three-way ball valve (100), including a valve body (10) and a spherical valve core (20). The valve body (10) includes a medium inlet (11), a first medium outlet (12), and a second medium outlet (13), the medium inlet (11) being configured to introduce a circulating medium, the first medium outlet (12) being connected to a first heating unit, and the second medium outlet (13) being connected to a second heating unit. The spherical valve core (20) is rotatably disposed in the valve body (10), and includes a first flow channel (21) and a second flow channel (22) with unequal cross-sectional areas, a cross-sectional area of the first flow channel (21) is greater than that of the second flow channel (22), the first flow channel (21) and the second flow channel (22) are distributed around a rotation axis of the spherical valve core (10), the spherical valve core (10) includes an initial position, in which an opening degree of the three-way ball valve (100) is 50%, in the initial position, the medium inlet (11) is in communication with the first medium outlet (12), and is also in communication with the second medium outlet (13), and the spherical valve core (10) is controlled to rotate to adjust the opening degree of the three-way ball valve (100). The ball valve can balance a flow difference on two sides. Further disclosed are an electric vehicle using the ball valve, an opening degree control method, an electronic device, and a storage medium.

## Description

### TECHNICAL FIELD

The present disclosure relates to the field of ball valve technologies, and in particular, to a three-way ball valve, an electric vehicle, an opening degree control method, an electronic device, and a storage medium.

### BACKGROUND

As an example, an air conditioner in an electric vehicle uses a water-cooling circulation to heat a battery and to heat an occupant compartment, which causes a problem of heating distribution on two sides. For example, during heating of the occupant compartment, if the battery needs to be heated, an air outlet temperature for the occupant compartment will fluctuate greatly. However, the existing ball valve structure cannot balance a significant difference in flow requirements on two sides.

### SUMMARY

In view of this, embodiments of the present disclosure provide a three-way ball valve, an opening degree control method, an electronic device, and a storage medium, which can balance a significant difference in flow requirements on two sides.

According to a first aspect of the embodiments of the present disclosure, there is provided a three-way ball valve, including:
a valve body, provided with a medium inlet, a first medium outlet, and a second medium outlet, the medium inlet being configured to introduce a circulating medium, the first medium outlet being configured to be connected to a first heating unit, and the second medium outlet being configured to be connected to a second heating unit; and
a spherical valve core, rotatably disposed in the valve body, and provided with a first flow channel and a second flow channel with unequal cross-sectional areas, where a cross-sectional area of the first flow channel is greater than a cross-sectional area of the second flow channel, the first flow channel and the second flow channel are distributed around a rotation axis of the spherical valve core, the spherical valve core is provided with an initial position, the initial position being a position where an opening degree of the three-way ball valve is 50%, in the initial position, the medium inlet is in sealed communication with the first medium outlet through the first flow channel, and is also in sealed communication with the second medium outlet through the second flow channel, and the spherical valve core is controlled to rotate in a clockwise or counterclockwise direction from the initial position to adjust the opening degree of the three-way ball valve.

Optionally, the first flow channel and the second flow channel are configured such that a ratio of the cross-sectional area of the first flow channel to the cross-sectional area of the second flow channel is equal to a ratio of a maximum heat load of the first heating unit to a maximum heat load of the second heating unit, and is also equal to a ratio of a communication area between the medium inlet and the first flow channel to a communication area between the medium inlet and the second flow channel when the opening degree of the three-way ball valve is 50%.

Optionally, a size of the first flow channel in a direction of the rotation axis of the spherical valve core is greater than a size of the second flow channel in the direction, and in the direction of the rotation axis, at least one end of the first flow channel is closer to an end of the spherical valve core than the second flow channel.

Optionally, the first flow channel is symmetrical about a plane perpendicular to the rotation axis, and the plane is a plane in which a diameter of the spherical valve core is located.

Optionally, the second flow channel is symmetrical about the plane.

Optionally, the first flow channel and the second flow channel are disposed within 180° in a circumferential direction of the spherical valve core.

Optionally, the first flow channel is disposed within a range of 45° to 90° in the circumferential direction of the spherical valve core; and/or
the second flow channel is disposed within a range of 45° to 90° in the circumferential direction of the spherical valve core.

According to a second aspect of the embodiments of the present disclosure, there is provided an electric vehicle, including:
the three-way ball valve according to any one of the above;
a medium input component, connected to the medium inlet of the three-way ball valve;
a first heating unit and a first component, the first heating unit connecting the first medium outlet of the three-way ball valve and the first component, and being configured to supply heat to the first component; and
a second heating unit, connecting the second medium outlet of the three-way ball valve and a second component, and configured to supply heat to the second component, where a heat load of the first heating unit is greater than a heat load of the second heating unit.

According to a third aspect of the embodiments of the present disclosure, there is provided a method of controlling an opening degree of a three-way ball valve, applied to the three-way ball valve according to any one of the above, the method including:
obtaining a ratio of a current heat load of the first heating unit to a current heat load of the second heating unit, as a first ratio;
comparing the first ratio to a second ratio to obtain a comparison result, where the second ratio is defined as a ratio of the cross-sectional area of the first flow channel to the cross-sectional area of the second flow channel, and the cross-sectional area of the first flow channel is greater than the cross-sectional area of the second flow channel;
controlling the opening degree of the three-way ball valve according to the comparison result, where the opening degree of the three-way ball valve is 50% in the initial position of the spherical valve core.

Optionally, the second ratio is equal to a ratio of a maximum heat load of the first heating unit to a maximum heat load of the second heating unit, and is also equal to a ratio of a communication area between the medium inlet and the first flow channel to a communication area between the medium inlet and the second flow channel when the opening degree of the three-way ball valve is 50%.

Optionally, in response to the first ratio being greater than the second ratio, the opening degree of the three-way ball valve is controlled to be 50%+(S1-S)/S*50%, so that a flow in the first flow channel is greater than a flow in the second flow channel;
in response to the first ratio being less than the second ratio, the opening degree of the three-way ball valve is controlled to be 50%-(S-S1)/S*50%, so that the flow in the first flow channel is less than the flow in the second flow channel;
in response to the first ratio being equal to the second ratio, the opening degree of the three-way ball valve is controlled to be 50%,
where S1 is the ratio of the current heat load of the first heating unit to the current heat load of the second heating unit, and S is the ratio of the cross-sectional area of the first flow channel to the cross-sectional area of the second flow channel.

Optionally, the current heat load of the first heating unit is R1*Q1*|T1-Ts|, and the current heat load of the second heating unit is R2* Q2*|T2-Td|,
where R1 is a specific heat capacity of a medium in the first heating unit, Q1 is a circulating flow rate of the medium in the first heating unit, T1 is a current temperature of the medium in the first heating unit, and Ts is a target temperature of the medium in the first heating unit; R2 is a specific heat capacity of a medium in the second heating unit, Q2 is a circulating flow rate of the medium in the second heating unit, T2 is a current temperature of the medium in the second heating unit, and Td is a target temperature of the medium in the second heating unit.

According to a fourth aspect of the embodiments of the present disclosure, there is provided an electronic device, the electronic device includes at least one memory and at least one processor, the at least one memory is configured to store computer instructions executable on the at least one processor, and the at least one processor is configured to implement the method according to any one of the above when executing the computer instructions.

According to a fifth aspect of the embodiments of the present disclosure, there is provided a computer-readable storage medium, having stored thereon a computer program, which, when executed by at least one processor, implements the method according to any one of the above.

According to the embodiments of the present disclosure, the present disclosure provides a three-way ball valve, an electric vehicle, an opening degree control method, an electronic device, and a storage medium. The spherical valve core is provided with a first flow channel and a second flow channel with unequal cross-sectional areas, a first medium outlet is communicated with a first heating unit with a relatively large flow requirement, and a second medium outlet is communicated with a second heating unit with a relatively small flow requirement, so that a larger flow of the circulating medium is introduced into the first heating unit, and more heat is generated by the first heating unit, so as to balance a significant difference in flow requirements on two sides. In addition, a position of the spherical valve core where an opening degree of the three-way ball valve is 50% is used as an initial position, so that the opening degree of the three-way ball valve may be adjusted by clockwise or counterclockwise rotation of the spherical valve core, enabling uneven flow distribution on two sides.

### BRIEF DESCRIPTION OF DRAWINGS

In order to more clearly illustrate the technical solutions in the embodiments of the present disclosure, the accompanying drawings to be used in the description of the embodiments will be briefly introduced below, and it is apparent that the accompanying drawings in the following description only illustrate some embodiments of the present disclosure, and those of ordinary skill in the art may obtain other drawings according to these drawings without creative efforts.
FIG. 1 is a schematic diagram illustrating an opening degree of a three-way ball valve according to embodiments of the present disclosure, where the opening degree of the three-way ball valve is 50%.
FIG. 2 is a schematic diagram of a spherical valve core according to embodiments of the present disclosure.
FIG. 3 is a schematic diagram of a three-way ball valve with an opening degree of 0% according to embodiments of the present disclosure.
FIG. 4 is a schematic diagram of a three-way ball valve with an opening degree of 100% according to embodiments of the present disclosure.
FIG. 5 is a flowchart of a method of controlling an opening degree of a three-way ball valve according to embodiments of the present disclosure.

### DETAILED DESCRIPTION

The technical solutions in the embodiments of the present disclosure will be clearly and completely described below with reference to the accompanying drawings in the embodiments of the present disclosure. It is apparent that the described embodiments are only a part of the embodiments of the present disclosure, not all of the embodiments. All other embodiments obtained by those of ordinary skill in the art based on the embodiments of the present disclosure without creative efforts shall fall within the protection scope of the present disclosure.

The terms used in the embodiments of the present disclosure are only for the purpose of describing specific embodiments, and are not intended to limit the embodiments of the present disclosure. As used in the embodiments of the present disclosure and the appended claims, the singular forms "a", "an" and "the" are intended to include the plural forms as well, unless the context clearly indicates otherwise. It should also be understood that the term "and/or" used herein refers to and includes any or all possible combinations of one or more of the associated listed items.

It should be understood that although the terms first, second, third, etc. may be used in the embodiments of the present disclosure to describe various information, these information should not be limited to these terms. These terms are only used to distinguish the same type of information from each other. For example, without departing from the scope of the embodiments of the present disclosure, first information may also be referred to as second information, and similarly, second information may also be referred to as first information. Depending on the context, the word "if" as used herein may be interpreted as "when ..." or "upon ..." or "in response to determining that".

For purposes of brevity and ease of understanding, terms used herein in characterizing size relationships are "greater than" or "less than," "higher than" or "lower than." However, for those of skill in the art, it can be understood that the term "greater than" also covers the meaning of "greater than or equal to", and "less than" also covers the meaning of "less than or equal to"; the term "higher than" covers the meaning of "higher than or equal to", and "lower than" also covers the meaning of "lower than or equal to".

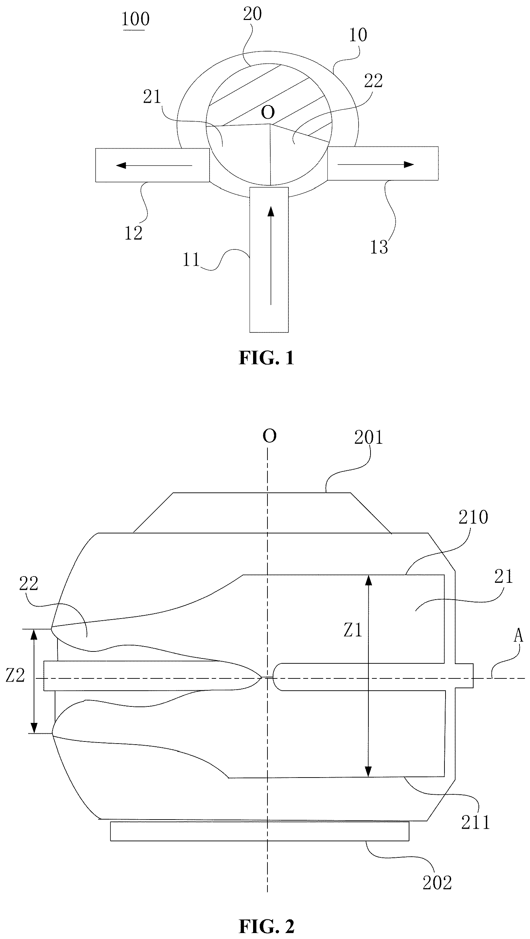

Referring to FIGS. 1 and 2, FIG. 1 is a schematic diagram of a three-way ball valve 100 according to an exemplary embodiment of the present disclosure. FIG. 2 is a schematic diagram of a spherical valve core 20 according to an exemplary embodiment of the present disclosure.

The present disclosure provides a three-way ball valve 100, including a valve body 10 and a spherical valve core 20 rotatably disposed in the valve body 10, and a rotation axis of the spherical valve core 20 is denoted as O. The spherical valve core 20 may be provided with a transmission rod at the top thereof, and a motor may drive the transmission rod to rotate through a gear mechanism, thereby driving the spherical valve core 20 to rotate. The gear mechanism functions as a reduction mechanism.

The valve body 10 is provided with a medium inlet 11, a first medium outlet 12, and a second medium outlet 13, and the medium inlet 11 is configured to introduce a circulating medium, such as a liquid medium. The first medium outlet 12 is configured to be connected to a first heating unit, the first heating unit is configured to heat a first component, and the first heating unit includes, but is not limited to, a heat exchange component. The second medium outlet 13 is configured to be connected to a second heating unit, the second heating unit is configured to heat a second component, and the second heating unit includes, but is not limited to, an air conditioner. In an embodiment, one of the first component and the second component is a battery, and the other of the first component and the second component is the occupant compartment, but not limited thereto.

The spherical valve core 20 is provided with a first flow channel 21 and a second flow channel 22 with unequal cross-sectional areas, where the cross-sectional area of the first flow channel 21 is greater than the cross-sectional area of the second flow channel 22, the first flow channel 21 and the second flow channel 22 are distributed around a rotation axis O of the spherical valve core 20, and the spherical valve core 20 is in sealed engagement with the valve body 10, so that the first flow channel 21 and the second flow channel 22 respectively form sealed flow channels and are separated from each other. For example, the spherical valve core 20 and the valve body 10 may be sealed by a sealing ring. The cross-sectional area herein refers to an area of the first flow channel 21 or the second flow channel 22 in a cross-section obtained by cutting the first flow channel 21 or the second flow channel 22 with a vertical plane in which the rotation axis O is located as shown in FIG. 2.

The spherical valve core 20 is provided with an initial position, and the initial position is a position in which the opening degree of the three-way ball valve 100 is 50%. In the initial position, the medium inlet 11 is in sealed communication with the first medium outlet 12 through the first flow channel 21, and is also in sealed communication with the second medium outlet 13 through the second flow channel 22, at which time, a medium in the medium inlet 11 may flow into the first flow channel 21 and the second flow channel 22. The spherical valve core 20 is controlled to rotate relative to the valve body 10 around the rotation axis O from the initial position, so that the opening degree of the three-way ball valve 100 is adjustable. A rotation direction of the spherical valve core 20 may be clockwise or counterclockwise. The spherical valve core 20 may be controlled by a ratio of a heat load of the first heating unit to a heat load of the second heating unit, but is not limited thereto.

As above, the spherical valve core 20 is provided with the first flow channel 21 and the second flow channel 22 with unequal cross-sectional areas, where the cross-sectional area of the first flow channel 21 is greater than the cross-sectional area of the second flow channel 22. The first medium outlet 12 may be communicated with the first heating unit with a relatively large flow requirement, and the second medium outlet 13 may be communicated with the second heating unit with a relatively small flow requirement, so that a larger flow of the circulating medium is introduced into the first heating unit, and more heat is generated by the first heating unit, so as to balance a significant difference in flow requirements on two sides. In addition, a position of the spherical valve core 20 where the opening degree of the three-way ball valve 100 is 50% is used as the initial position, so that the opening degree of the three-way ball valve may be adjusted by clockwise or counterclockwise rotation of the spherical valve core 20, enabling uneven flow distribution on two sides. One of the first flow channel 21 and the second flow channel 22 may be closed, and the other of the first flow channel 21 and the second flow channel 22 may be fully opened.

In an embodiment, the first flow channel 21 and the second flow channel 22 are configured such that a ratio of the cross-sectional area of the first flow channel 21 to the cross-sectional area of the second flow channel 22 is equal to a ratio of a maximum heat load of the first heating unit to a maximum heat load of the second heating unit, and is also equal to a ratio of a communication area between the medium inlet 11 and the first flow channel 21 to a communication area between the medium inlet 11 and the second flow channel 22 when the opening degree of the three-way ball valve is 50%. With this arrangement, the initial position of the spherical valve core 20 may be determined according to the ratio of the maximum heat load of the first heating unit to the maximum heat load of the second heating unit, and when a ratio of a current heat load of the first heating unit to a current heat load of the second heating unit changes under different operating conditions, the spherical valve core 20 is controlled to rotate to adjust the opening degree of the three-way ball valve 100, so that the flow may be controlled through the three-way ball valve 100 to meet flow distribution requirements on two sides.

In an embodiment, a size Z1 of the first flow channel 21 in a direction of the rotation axis O of the spherical valve core 20 is greater than a size Z2 of the second flow channel 22 in this direction, and in the direction of the rotation axis O, at least one end of the first flow channel 21 is closer to an end of the spherical valve core 20 than the second flow channel 22. For example, a top end 210 of the first flow channel 21 in the direction of the rotation axis O is closer to a top 201 of the spherical valve core 20 than a top end of the second flow channel 22. For another example, a bottom end 211 of the first flow channel 21 in the direction of the rotation axis O is closer to a bottom 202 of the spherical valve core 20 than a bottom end of the second flow channel 22. With this arrangement, a space of the spherical valve core 20 in the direction of the rotation axis O may be fully utilized, so that the size Z1 of the first flow channel 21 in the direction of the rotation axis O is greater than the size Z2 of the second flow channel 22 in this direction, thereby increasing the cross-sectional area of the first flow channel 21 to meet the flow distribution requirements of the first flow channel 21 and the second flow channel 22.

In the embodiment shown in FIG. 2, the top end of the first flow channel 21 in the direction of the rotation axis O is closer to the top of the spherical valve core 20 than the top end of the second flow channel 22, and the bottom end of the first flow channel 21 in the direction of the rotation axis O is closer to the bottom of the spherical valve core 20 than the top end of the second flow channel 22, so that two ends of the first flow channel 21 in the direction of the rotation axis O are close to ends of the spherical valve core 20 at their respective ends, thereby achieving a larger or maximized cross-sectional area of the first flow channel 21. The first flow channel 21 and/or the second flow channel 22 may be a square or rectangular flow channel, but are not limited thereto.

In an embodiment, the first flow channel 21 is symmetrical about a plane A perpendicular to the rotation axis O, and the plane A is a plane where a diameter of the spherical valve core 20 is located. That is, the first flow channel 21 is configured as a symmetrical flow channel symmetrical about the plane A, and sizes of the first flow channel 21 on two sides of the plane A are equal. In this way, some spaces may be reserved at the top and the bottom of the spherical valve core 20, respectively, where a space at the top may be used to provide a connection structure connected to the transmission rod, and a space at the bottom may be used to provide a reinforcing structure, for example. As such, in addition to increasing the cross-sectional area of the first flow channel 21, a structural arrangement of the spherical valve core 20 is facilitated, and the spherical valve core 20 is ensured to have a sufficient strength.

In an embodiment, the second flow channel 22 is symmetrical about the plane A. In this way, the second flow channel 22 is configured as a symmetrical flow channel, and sizes of the second flow channel 22 on two sides of the plane A are equal, so that the second flow channel 22 is closer to a center of the spherical valve core 20 to increase strength of the top and bottom of the spherical valve core 20 in the direction of the rotation axis O.

An arrangement area of the first flow channel 21 and the second flow channel 22 in a circumferential direction of the spherical valve core 20 is not limited in the present disclosure. In an embodiment, the first flow channel 21 and the second flow channel 22 are disposed within 180° in the circumferential direction of the spherical valve core 20. With this arrangement, on the one hand, circumferential lengths of the first flow channel 21 and the second flow channel 22 may be reduced, which is conducive to increasing the strength of the spherical valve core 20. In addition, a rotation angle of the spherical valve core 20 may be reduced, which is conducive to reducing a wear amount of the sealing ring between the valve body 10 and the spherical valve core 20, so as to improve durability of the three-way ball valve 100 in use.

In a specific embodiment, the first flow channel 21 is disposed within a range of 45° to 90° in the circumferential direction of the spherical valve core 20. For example, an area where the first flow channel 21 is disposed may be 45°, 50°, 55°, 60°, 70°, 80°, 90°, but is not limited thereto. In a specific embodiment, the second flow channel 22 is disposed within a range of 45° to 90° in the circumferential direction of the spherical valve core 20. For example, an area where the second flow channel 22 is disposed may be 45°, 50°, 55°, 60°, 65°, 70°, 75°, 80°, 85°, 90°, but is not limited thereto.

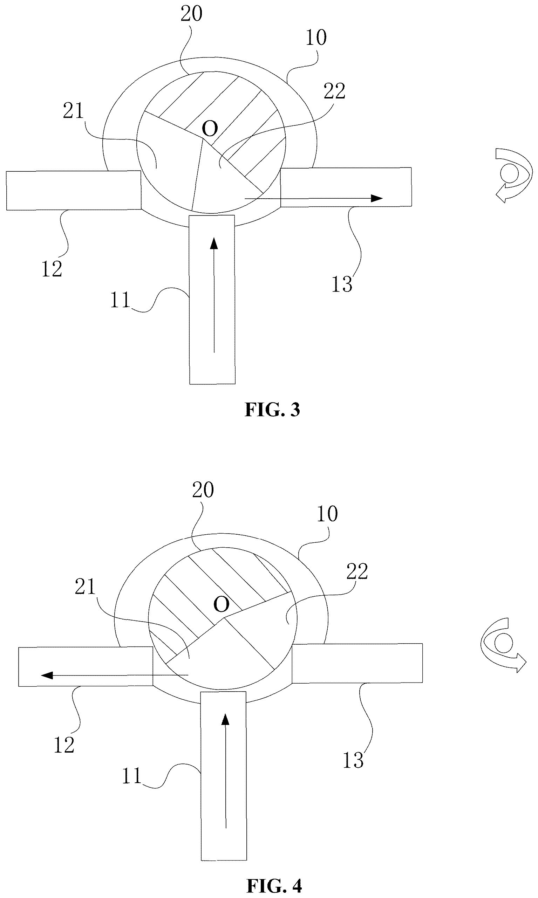

The opening degree of the three-way ball valve 100 is adjustable. FIG. 1 is a schematic diagram illustrating that the opening degree of the three-way ball valve 100 is 50%. FIG. 3 is a schematic diagram illustrating that the opening degree of the three-way ball valve 100 is 0%. FIG. 4 is a schematic diagram illustrating that the opening degree of the three-way ball valve 100 is 100%.

In the embodiment shown in FIG. 1, when the opening degree of the three-way ball valve 100 is 50%, both the first flow channel 21 and the second flow channel 22 are in communication with the medium inlet 11. In the embodiment shown in FIG. 3, when the opening degree of the three-way ball valve 100 is 0%, the first flow channel 21 is closed, and the second flow channel 22 is fully opened and communicates with the medium inlet 11. In the embodiment shown in FIG. 4, when the opening degree of the three-way ball valve 100 is 100%, the first flow channel 21 is fully opened and communicates with the medium inlet 11, and the second flow channel 22 is closed. In this way, flow rates in the first flow channel 21 and the second flow channel 22 may be adjusted by adjusting the opening degree of the three-way ball valve 100.

In an embodiment, the spherical valve core 20 is further provided with a first rotation stop position and a second rotation stop position, and the spherical valve core 20 is controlled to rotate between the first rotation stop position and the second rotation stop position to adjust the opening degree of the three-way ball valve 100 from 0% to 100%. The first rotation stop position and the second rotation stop position are configured as limit positions at two ends of a rotation travel of the spherical valve core 20, and the first rotation stop position and the second rotation stop position are disposed at an area of the spherical valve core 20 where no flow channel is provided. Portions of the spherical valve core 20 other than the first flow channel 21 and the second flow channel 22 may be used as the first rotation stop position and the second rotation stop position.

The present disclosure further provides an electric vehicle, including the three-way ball valve 100 described above, a medium input component, a first heating unit, a first component, a second heating unit, and a second component. The medium input component is connected to the medium inlet 11 of the three-way ball valve 100, the first heating unit is connected to the first medium outlet 12 of the three-way ball valve 100 and the first component for supplying heat to the first component, and the second heating unit is connected to the second medium outlet 13 of the three-way ball valve 100 and the second component for supplying heat to the second component. A heat load of the first heating unit is greater than a heat load of the second heating unit. In this way, a significant difference in flow requirements between the first component and the second component in the electric vehicle may be balanced. In an embodiment, one of the first heating unit and the second heating unit is a heat exchange component, and the other of the first heating unit and the second heating unit is an air conditioner. One of the first component and the second component is a battery component, and the other of the first component and the second component is the occupant compartment, but not limited thereto.

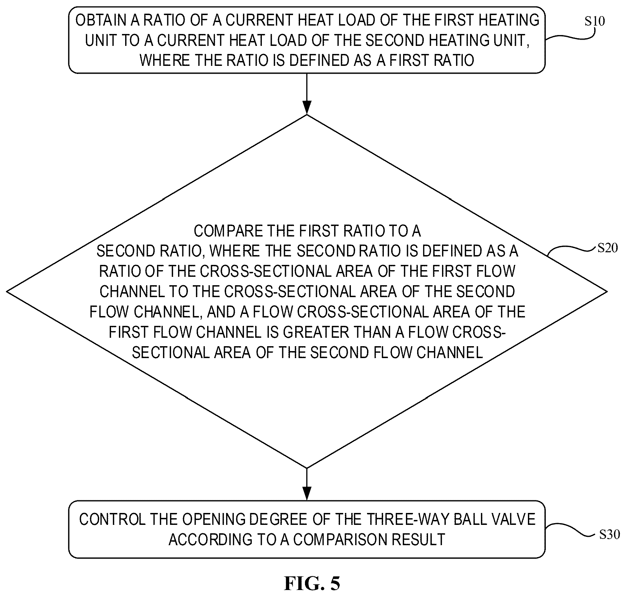

Referring to FIG. 5, FIG. 5 is a flowchart of a method of controlling an opening degree of a three-way ball valve according to an exemplary embodiment of the present disclosure.

The present disclosure further provides a method of controlling an opening degree of a three-way ball valve 100, which is applied to the three-way ball valve 100 described above.

The method includes step S10, step S20, and step S30.

In step S10, a ratio of a current heat load of the first heating unit to a current heat load of the second heating unit is obtained and defined as a first ratio.

The current heat load of the first heating unit varies under different operating conditions, and the current heat load of the second heating unit varies under different operating conditions, so it is necessary to obtain the current heat load of the first heating unit and the current heat load of the second heating unit in real time, and determine the ratio of the two.

In an embodiment, the current heat load of the first heating unit is R1×Q1×|T1-Ts|, and the current heat load of the second heating unit is R2×Q2×|T2-Td|. R1 is a specific heat capacity of a medium in the first heating unit, Q1 is a circulating flow rate of the medium in the first heating unit, T1 is a current temperature of the medium in the first heating unit, and Ts is a target temperature of the medium in the first heating unit; R2 is a specific heat capacity of a medium in the second heating unit, Q2 is a circulating flow rate of the medium in the second heating unit, T2 is a current temperature of the medium in the second heating unit, and Td is a target temperature of the medium in the second heating unit. R1 and R2 have fixed values, for example, R1 may be a specific heat capacity of a coolant, and R2 may be a specific heat capacity of the air. Q1, T1, Q2, and T2 may be acquired by a sensor, and Ts and Td may be preset values.

In step S20, the first ratio is compared to a second ratio, where the second ratio is defined as a ratio of the cross-sectional area of the first flow channel to the cross-sectional area of the second flow channel, and a flow cross-sectional area of the first flow channel is greater than a flow cross-sectional area of the second flow channel.

In this step, the second ratio may be determined according to the maximum heat load of the first heating unit and the maximum heat load of the second heating unit. Specifically, the second ratio may be equal to the ratio of the maximum heat load of the first heating unit to the maximum heat load of the second heating unit, and is also equal to the ratio of the communication area between the medium inlet 11 and the first flow channel 21 to the communication area between the medium inlet 11 and the second flow channel 22 when the opening degree of the three-way ball valve is 50%. In this way, design parameters of the first flow channel 21 and the second flow channel 22 may be associated with heat load parameters during operation of a system to meet flow control requirements.

In step S30, the opening degree of the three-way ball valve 100 is controlled according to a comparison result, where the opening degree of the three-way ball valve is 50% in the initial position of the spherical valve core. That is, during adjustment of the opening degree, the three-way ball valve 100 rotates clockwise or counterclockwise from the initial position.

In this method, according to magnitudes of the first ratio and the second ratio, a position of the spherical valve core 20 may be controlled, enabling uneven flow distribution on two sides and meeting heating requirements on two sides.

In an embodiment, in response to the first ratio being greater than the second ratio, the opening degree of the three-way ball valve is controlled to be 50%+(S1-S)/S*50%, so that a flow in the first flow channel 21 is greater than a flow in the second flow channel 22. In response to the first ratio being less than the second ratio, the opening degree of the three-way ball valve is controlled to be 50%-(S-S1)/S*50%, so that the flow in the first flow channel 21 is less than the flow in the second flow channel. In response to the first ratio being equal to the second ratio, the opening degree of the three-way ball valve is controlled to be 50%. S1 is the ratio of the current heat load of the first heating unit to the current heat load of the second heating unit, and S is the ratio of the cross-sectional area of the first flow channel to the cross-sectional area of the second flow channel. In this way, under different operating conditions, the opening degree of the three-way ball valve may be controlled in real time according to a change in the current heat loads of the first heating unit and the second heating unit, so as to achieve uneven flow distribution on two sides.

The present disclosure further provides an electronic device, the electronic device includes at least one memory and at least one processor, the at least one memory is configured to store computer instructions executable on the at least one processor, and the at least one processor is configured to implement the method according to any one of the above when executing the computer instructions.

The present disclosure further provides a computer-readable storage medium having a computer program stored thereon, where the computer program, when executed by at least one processor, implements the method according to any one of the above.

The foregoing description is merely an exemplary embodiment of the present disclosure, and is not intended to limit the present disclosure. Any modifications, equivalent substitutions, improvements, etc. made within the spirit and scope of the present disclosure should be included within the scope of protection of the present disclosure.

## Claims

1. A three-way ball valve, comprising:
a valve body, comprising a medium inlet, a first medium outlet, and a second medium outlet, the medium inlet being configured to introduce a circulating medium, the first medium outlet being configured to be connected to a first heating unit, and the second medium outlet being configured to be connected to a second heating unit; and
a spherical valve core, rotatably disposed in the valve body, and comprising a first flow channel and a second flow channel with unequal cross-sectional areas,
wherein
a cross-sectional area of the first flow channel is greater than a cross-sectional area of the second flow channel, and the first flow channel and the second flow channel are distributed around a rotation axis of the spherical valve core,
the spherical valve core comprises an initial position, in which an opening degree of the three-way ball valve is 50%, and in the initial position, the medium inlet is in sealed communication with the first medium outlet through the first flow channel, and is also in sealed communication with the second medium outlet through the second flow channel, and
the spherical valve core is controlled to rotate in a clockwise or counterclockwise direction from the initial position to adjust the opening degree of the three-way ball valve.

2. The three-way ball valve according to claim 1, wherein the first flow channel and the second flow channel are configured such that a ratio of the cross-sectional area of the first flow channel to the cross-sectional area of the second flow channel is equal to a ratio of a maximum heat load of the first heating unit to a maximum heat load of the second heating unit, and is also equal to a ratio of a communication area between the medium inlet and the first flow channel to a communication area between the medium inlet and the second flow channel when the opening degree of the three-way ball valve is 50%.

3. The three-way ball valve according to claim 1, wherein a size of the first flow channel in a direction of the rotation axis of the spherical valve core is greater than a size of the second flow channel in the direction, and in the direction of the rotation axis, at least one end of the first flow channel is closer to an end of the spherical valve core than the second flow channel.

4. The three-way ball valve according to any one of claims 1 to 3, wherein the first flow channel is symmetrical about a plane perpendicular to the rotation axis, and the plane is a plane in which a diameter of the spherical valve core is located.

5. The three-way ball valve according to claim 4, wherein the second flow channel is symmetrical about the plane.

6. The three-way ball valve according to any one of claims 1 to 3, wherein the first flow channel and the second flow channel are disposed within 180° in a circumferential direction of the spherical valve core.

7. The three-way ball valve according to claim 6, wherein the first flow channel is disposed within a range of 45° to 90° in the circumferential direction of the spherical valve core; and/or
the second flow channel is disposed within a range of 45° to 90° in the circumferential direction of the spherical valve core.

8. An electric vehicle, comprising:
the three-way ball valve according to any one of claims 1 to 7;
a medium input component, connected to the medium inlet of the three-way ball valve;
a first heating unit and a first component, the first heating unit connecting the first medium outlet of the three-way ball valve and the first component, and being configured to supply heat to the first component; and
a second heating unit, connecting the second medium outlet of the three-way ball valve and a second component, and configured to supply heat to the second component, wherein a heat load of the first heating unit is greater than a heat load of the second heating unit.

9. A method of controlling an opening degree of a three-way ball valve, applied to the three-way ball valve according to any one of claims 1 to 7, the method comprising:
obtaining a ratio of a current heat load of the first heating unit to a current heat load of the second heating unit, as a first ratio;
comparing the first ratio to a second ratio to obtain a comparison result, wherein the second ratio is defined as a ratio of the cross-sectional area of the first flow channel to the cross-sectional area of the second flow channel, and the cross-sectional area of the first flow channel is greater than the cross-sectional area of the second flow channel; and
controlling the opening degree of the three-way ball valve according to the comparison result, wherein the opening degree of the three-way ball valve is 50% in the initial position of the spherical valve core.

10. The method according to claim 9, wherein the second ratio is equal to a ratio of a maximum heat load of the first heating unit to a maximum heat load of the second heating unit, and is also equal to a ratio of a communication area between the medium inlet and the first flow channel to a communication area between the medium inlet and the second flow channel when the opening degree of the three-way ball valve is 50%.

11. The method according to claim 9, wherein in response to the first ratio being greater than the second ratio, the opening degree of the three-way ball valve is controlled to be 50%+(S1-S)/S*50%, so that a flow in the first flow channel is greater than a flow in the second flow channel;
in response to the first ratio being less than the second ratio, the opening degree of the three-way ball valve is controlled to be 50%-(S-S1)/S*50%, so that the flow in the first flow channel is less than the flow in the second flow channel; and
in response to the first ratio being equal to the second ratio, the opening degree of the three-way ball valve is controlled to be 50%,
wherein S1 is the ratio of the current heat load of the first heating unit to the current heat load of the second heating unit, and S is the ratio of the cross-sectional area of the first flow channel to the cross-sectional area of the second flow channel.

12. The method according to any one of claims 9 to 11, wherein the current heat load of the first heating unit is R1*Q1*|T1-Ts|, and the current heat load of the second heating unit is R2* Q2*|T2-Td|,
wherein R1 is a specific heat capacity of a medium in the first heating unit, Q1 is a circulating flow rate of the medium in the first heating unit, T1 is a current temperature of the medium in the first heating unit, and Ts is a target temperature of the medium in the first heating unit; R2 is a specific heat capacity of a medium in the second heating unit, Q2 is a circulating flow rate of the medium in the second heating unit, T2 is a current temperature of the medium in the second heating unit, and Td is a target temperature of the medium in the second heating unit.

13. An electronic device, comprising at least one memory and at least one processor, wherein the at least one memory is configured to store computer instructions executable on the at least one processor, and the at least one processor is configured to implement the method according to any one of claims 9 to 12 when executing the computer instructions.

14. A computer-readable storage medium, having a computer program stored thereon, wherein the computer program, when executed by at least one processor, implements the method according to any one of claims 9 to 12.
